# DEMANDE DE BREVET EUROPEEN

(11) **EP 1 130 701 A1**
(43) Date de publication de la demande: **05.09.2001**
(21) Numéro de dépôt: 01400252.1
(22) Date de dépôt: 01.02.2001
(51) Int. Cl.: H01S 3/067

(54) **Amplificateur optique à fibre à gaine multimode en bande C**

(30) Priorité: 03.03.2000 FR 0002752
(71) Demandeur: ALCATEL, 75008 Paris (FR)
(72) Inventeur: Bayart, Dominique, 92140 Clamart (FR); Bousselet, Philippe, 91630 Leudeville (FR); Leplingard, Florence, 78000 Versailles (FR); Lorcy, Laurence, 77310 St. Fargeau Ponthierry (FR); Gasca, Laurent, 91140 Villebon sur Yvette (FR)
(74) Mandataire: Lamoureux, Bernard

(57) **Abrégé**

L'invention concerne les amplificateurs optiques. Elle propose un amplificateur optique en bande C, comprenant une fibre avec un coeur monomode, une gaine interne multimode et une gaine externe, et des moyens de pompage de la fibre. La fibre n'est pas dopée à l'ytterbium et la gaine multimode présente un diamètre inférieur à 55 µm.

L'invention s'applique à l'amplification des signaux en bande C, dans les systèmes de transmission à multiplexage en longueur d'onde.

## Description

La présente invention concerne l'amplification optique, et plus spécifiquement l'amplification par pompage de fibres dopées.

De nombreux amplificateurs et répéteurs pour systèmes de transmission utilisent pour l'amplification des signaux transmis un pompage dans une fibre optique dopée à l'erbium. L'amplification repose sur l'absorption de la pompe par les ions du dopant de la fibre, et par un transfert de l'énergie depuis les ions du dopant vers les signaux traversant la fibre. On appelle dans ce contexte taux d'inversion de population la proportion d'ions du dopant à l'état excité. L'erbium présente une bande de gain naturelle avec un taux d'inversion élevé autour de 1530 à 1560 nm; il présente aussi une bande de gain avec un taux d'inversion plus faible autour de 1570 à 1600 nm.

L'émergence des systèmes de transmission à multiplexage en longueur d'onde rend nécessaire d'une part une bande passante plus large pour multiplier le nombre de canaux, et d'autre part une augmentation du gain sur toute la largeur de bande disponible. Pour ce qui est des bandes, on distingue diverses bandes dans les systèmes de transmission à fibre optique. On appelle "bande C" la plage de longueur d'onde entre 1529 et 1565, et "bande L" la plage de longueur d'onde entre 1569 et 1603 nm. Plus généralement, on peut considérer pour la bande L des valeurs différentes, au-delà de 1565 nm, sur une largeur de bande de l'ordre de 30 ou 35 nm.

Pour augmenter le gain, on peut augmenter la puissance de la pompe injectée dans la fibre dopée; cette approche est limitée par la puissance des pompes utilisées et par l'efficacité du transfert de puissance dans la fibre dopée. Multiplier le nombre de pompes est une autre solution, qui présente des inconvénients de coût et d'encombrement.

Il a été proposé d'utiliser pour le pompage une fibre optique présentant un coeur et une gaine interne multimode. On parle aussi indifféremment de fibre à double coeur, ou de fibre à coeur multimode. Cette technique permet d'utiliser des pompes à large ruban, avec des puissances supérieures. Des puissances de quelques watts sont possibles, à comparer avec les puissances de quelques centaines de milliwatts pour les pompes des amplificateurs classiques proposées ci-dessus.

EP-A-0 723 714 propose d'utiliser pour le pompage une fibre optique multimode, qui présente un coeur monomode codopé, une gaine interne multimode, et une gaine externe. Un moyen de pompage multimode nm est couplé optiquement dans la gaine interne; le coeur monomode codopé à l'ytterbium et à l'erbium, pour favoriser le transfert d'énergie de la pompe de l'ytterbium vers l'erbium; de fait, l'ytterbium présente un pic d'absorption très élevé vers 975 nm.

FR-A-2 790 109 propose un amplificateur optique pour la bande L, utilisant une fibre optique avec une gaine interne multimode, et une faible inversion de population dans le coeur; ce document mentionne la fibre peut être une fibre codopée à l'ytterbium et à l'erbium, dans la mesure où l'inversion de population reste faible.

R. Sugimoto et autres, High power double band EDFA with simple configuration, ECOC'99, 1-276 à 1-277 propose un amplificateur pour les bandes C et L. Le premier étage d'amplification comprend deux fibres d'amplification à simple gaine, respectivement pompées par des pompes à 980 et 1480 nm; les bandes C et L sont amplifiées dans ce premier étage; le deuxième étage est dédié à l'amplification en bande L, et comprend une fibre à double gaine, qui est dopée à l'erbium uniquement dans le coeur de fibre. Le coeur de fibre présente un diamètre de 5 µm, et la gaine multimode présente un diamètre externe de 50 µm.

Ces deux documents utilisent pour l'amplification en bande L la bande de gain de l'erbium autour de 1570 à 1600 nm, qui présente un taux d'inversion plus faible que la bande d'absorption entre 1530 et 1560 nm. On utilise donc des amplificateurs avec une fibre plus longue.

L'invention concerne le problème de l'amplification optique en bande C. Elle propose une solution qui permet d'utiliser des fibres à coeur multimode, et des pompes à forte largeur de ruban. L'invention va à l'encontre du préjugé selon lequel un codopage à l'ytterbium est nécessaire pour le transfert de la puissance depuis la pompe vers les ions erbium. Un des problèmes que pose cette technique de codopage est que le dopage à l'ytterbium s'accompagne généralement d'un dopage au phosphore, pour faciliter le transfert de l'énergie depuis l'ytterbium vers l'erbium. Or le dopage au phosphore réduit d'environ 10 nm la largeur de bande dans laquelle l'erbium est utilisable pour l'amplification, le gain chutant alors en dessous d'environ 1535 nm; ceci constitue une barrière en bande C, et limite l'utilisation de la plage d'amplification disponible avec l'erbium.

Plus précisément, l'invention propose un amplificateur optique en bande C, comprenant une fibre avec un coeur monomode, une gaine interne multimode et une gaine externe, et des moyens de pompage de la fibre, dans lequel la fibre n'est pas dopée à l'ytterbium et la gaine multimode présente un diamètre inférieur à 55 µm.

Dans un mode de réalisation, la gaine multimode présente un diamètre inférieur à 35 µm.

Avantageusement, les moyens de pompage couplent dans la fibre une lumière dont 95 % de l'énergie est dans une bande de 978 ± 10 nm, et de préférence dans une bande de 978 ± 3 nm. On peut aussi utiliser pour le pompage une lumière dont 95 % de l'énergie est dans une bande de 1470 ± 15 nm, et de préférence dans une bande de 1470 ± 10 nm.

La gaine multimode peut être circulaire, et dans ce cas, le diamètre du coeur monomode est avantageusement compris entre 5 et 10 µm; toujours dans le cas d'une gaine circulaire, il est préférable que la différence d'indice entre le coeur monomode et la gaine multimode soit comprise entre 5.10⁻³ et 15.10⁻³.

Dans un autre mode de réalisation, la gaine multimode n'est pas circulaire. Dans ce cas, il est avantageux que le diamètre du coeur monomode soit compris entre 3 et 10 µm; la différence d'indice entre le coeur monomode et la gaine multimode est de préférence comprise entre 10.10⁻³ et 40.10⁻³.

Dans un cas comme dans l'autre, la différence d'indice entre la gaine multimode et la gaine externe est avantageusement comprise entre 10.10⁻³ et 150.10⁻³.

Le coeur monomode peut être dopé avec une terre rare, comme l'erbium; la concentration dans le coeur peut être entre 100 et 2000 ppm massiques.

L'invention propose aussi un système de transmission à multiplexage en longueur d'onde en bande C, comprenant au moins un tel amplificateur.

D'autres caractéristiques et avantages de l'invention apparaîtront à la lecture de la description qui suit de modes de réalisation de l'invention, donnée à titre d'exemple et en référence aux dessins annexés qui montrent:
- figure 1, une représentation du spectre d'un signal multiplexé en longueur d'onde en sortie d'un amplificateur selon l'invention;
- figure 2 un graphe du gain d'un amplificateur de l'invention;
- figure 3, un graphe du gain d'un amplificateur de l'état de la technique.

L'invention propose d'utiliser, pour l'amplification des signaux en bande C, une fibre optique présentant un coeur, une gaine interne multimode, et une gaine externe. A l'inverse du préjugé de l'état de la technique en faveur d'un codopage à l'ytterbium, l'invention propose d'utiliser une fibre optique qui n'est pas codopée à l'ytterbium. Elle propose aussi que la gaine interne de la fibre soit de faible diamètre, et plus exactement présente un diamètre inférieur à 55 µm, voire inférieur à 35 µm. Le fait que le diamètre du coeur multimode soit de faible taille améliore le recouvrement entre les modes de pompe et les signaux transmis dans le coeur de fibre, et permet d'éviter d'utiliser un codopant pour le transfert de l'énergie de la pompe vers les ions erbium.

L'invention permet une amplification en bande C; l'absence d'ytterbium et du phosphore associé permet une amplification sur toute la largeur de la bande d'amplification de l'erbium, et même en dessous de 1535 nm.

On entend par absence d'ytterbium dans la fibre une absence de dopage intentionnel à l'ytterbium. L'ytterbium peut exister dans la fibre à l'état de trace, ou être présent dans des proportions faibles. "Sans ytterbium" doit donc se comprendre comme une concentration en ytterbium inférieure à 10 ppm massiques dans la fibre. Cette concentration est à comparer avec les concentrations habituellement proposées pour les dopages à l'ytterbium, qui sont de l'ordre de 20 fois les concentrations en erbium.

La gaine multimode peut présenter une section circulaire classique; elle peut aussi présenter une section sans symétrie de révolution, mais invariante par rotation d'un angle donné. A titre d'exemple, on peut mentionner une section hexagonale, ou une section dite "en pétale de rose", c'est à dire une section présentant des creux réparties sur la périphérie de la gaine multimode; la fibre présente des rainures longitudinales. Dans un tel cas, la gaine externe n'est pas en silice, mais en un matériau tel que le silicone ou un polymère fluoré, et est ajoutée après étirage de la fibre optique. Cette deuxième solution présente l'avantage d'améliorer encore le recouvrement entre les modes couplés dans la gaine multimode et les signaux transmis dans le coeur de la fibre. Elle permet en outre une plus grande flexibilité dans le choix des indices du coeur, de la gaine multimode et de la gaine externe.

On donne maintenant à titre d'exemple des caractéristiques possibles de la fibre, pour une fibre avec un saut d'indice entre la gaine externe entre la gaine multimode, et un saut d'indice entre la gaine multimode et le coeur monomode. Si la gaine multimode est circulaire, le diamètre du coeur monomode peut être compris entre 5 et 10 µm; le diamètre de la gaine multimode peut comme indiqué plus haut aller jusqu'à 55 µm. La différence d'indice entre le coeur monomode et la gaine multimode est avantageusement comprise entre 5.10⁻³ et 15.10⁻³. La différence d'indice entre la gaine multimode et la gaine externe est avantageusement comprise entre 10.10⁻³ et 150.10⁻³.

Si la gaine multimode n'est pas circulaire, on utilise une gaine externe qui n'est pas en silice et qui peut plus facilement présenter un indice en dessous de l'indice de la silice; dans ce cas, le diamètre du coeur monomode est de préférence compris entre 3 et 10 µm, tandis que la différence d'indice entre le coeur monomode et la gaine multimode est avantageusement comprise entre 10.10⁻³ et 40.10⁻³. La différence d'indice entre la gaine multimode et la gaine externe est avantageusement comprise entre 10.10⁻³ et 150.10⁻³.

On peut utiliser pour le pompage de l'amplificateur selon l'invention des pompes centrées sur les pics d'absorption de l'erbium; le coeur de fibre peut être dopé à l'erbium à une proportion de 100 à 2000 ppm massiques; la gaine multimode n'est pas dopée à l'erbium. En l'absence de codopant pouvant transférer l'énergie de la pompe vers les ions, on utilise avantageusement autour du pic d'absorption à 980 nm une pompe dont 95 % de l'énergie est dans une bande de 978 ± 10 nm; une bande de 978 ± 3 nm donne des résultats encore plus satisfaisants. Autour du pic d'absorption à 1470 nm, on utilise de préférence une pompe dont 95 % de l'énergie est dans une bande de 1470 ± 15 nm; il est encore plus avantageux que 95 % de l'énergie soit dans une bande de 1470 ± 10 nm. Bien entendu, on peut pour le pompage de l'invention utiliser une ou plusieurs pompes, dans une bande ou dans les deux bandes.

On donne maintenant des exemples de réalisation de l'invention, pour une fibre présentant un coeur monomode d'un diamètre de 8,6 µm, avec un saut d'indice de 6,5.10⁻³ entre le coeur monomode et la gaine multimode. La gaine multimode présente un diamètre de 50 µm et le saut d'indice avec la gaine externe en silice est de 11.10⁻³. Dans ce cas, le coeur monomode est dopé à l'erbium, dans une concentration de 1000 ppm, tandis que la gaine multimode n'est pas dopée à l'erbium. La fibre utilisée pour l'amplificateur considéré à titre d'exemple a une longueur de 8 m. On injecte dans la fibre un signal multiplexé en longueur d'onde, avec 7 canaux régulièrement espacés entre 1529 et 1564 nm, à une puissance d'entrée de -5,2 dBm. Le signal est pompé par une pompe centrée autour d'une longueur d'onde de 980 nm, 95 % de l'énergie de la pompe se trouvant dans la bande de ± 4 nm autour de cette longueur d'onde centrale. La pompe est une diode semi-conductrice de pompage utilisant une technologie similaire à celle de la diode vendue par la société SDL (USA) sous la référence SDLO-4200. Elle présente une largeur de ruban de 50 µm; elle est couplée dans la fibre d'amplification par une fibre multimode de 50 µm de diamètre et un multiplexeur. La pompe présente une puissance d'émission de 5 W.

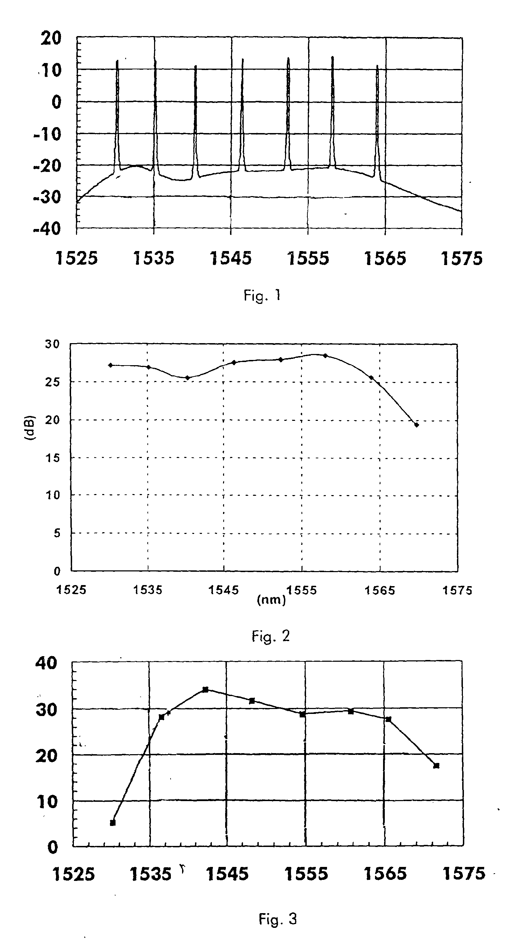

La figure 1 est une représentation du spectre du signal en sortie de l'amplificateur; en abscisse est portée la longueur d'onde en nm, et en ordonnée la puissance de sortie en dBm; on reconnaît clairement les sept pics des différents canaux, qui présentent une puissance sensiblement identique. La puissance de sortie moyenne est de +22 dBm, sur toute la largeur de la bande C. La figure 2 monte un graphe du gain sur la bande C, pour cet amplificateur; on a porté en abscisse la longueur d'onde, et en ordonnée le gain en dB. La figure montre que le gain reste sensiblement constant sur toute la largeur de la bande C, et notamment que l'amplificateur ne présente pas de chute de gain en dessous de 1536 nm.

A titre de comparaison, la figure 3 montre un graphe du gain d'un amplificateur à fibre multimode de l'état de la technique, avec un codopage à l'ytterbium et au phosphore. L'amplificateur est du type commercialisé par la société IRE-POLUS sous la référence EAD-X-C, avec X la puissance de l'amplificateur en Watts, entre 1 et 5 Watts. Comme le montre la figure 3, le gain chute en dessous de 1536 nm, du fait de la présence du phosphore associé à l'ytterbium. Ainsi, comme le montre la comparaison des figures 2 et 3, la bande utile dans l'amplificateur selon l'invention s'étend environ 10 nm plus bas que la bande utile dans les amplificateurs utilisés dans l'état de la technique pour la bande C.

Dans l'exemple des figures 1 et 2, la puissance de sortie moyenne est de +22 dBm, sur toute la largeur de la bande C, pour une puissance d'entrée de 0 dBm. Pour une fibre présentant un diamètre de gaine multimode de 30 µm, on obtient toutes choses égales par ailleurs une puissance de sortie de +24 dBm en sortie de l'amplificateur.

Bien entendu, l'invention n'est pas limitée aux modes de réalisation préférés décrits plus haut. Elle s'applique avec d'autres pompes que celles données dans l'exemple. On peut aussi utiliser des terres rares autres que l'erbium pour assurer l'amplification. Enfin, il est clair pour l'homme du métier que la fibre présente un dopage permettant de faire varier l'indice pour assurer le guidage de la lumière, typiquement un dopage au germanium.

## Revendications

1. Un amplificateur optique en bande C, comprenant une fibre avec un coeur monomode, une gaine interne multimode et une gaine externe, et des moyens de pompage de la fibre, dans lequel la fibre n'est pas dopée à l'ytterbium et la gaine multimode présente un diamètre inférieur à 55 µm.

2. L'amplificateur de la revendication 1, **caractérisé en ce que** la gaine multimode présente un diamètre inférieur à 35 µm.

3. L'amplificateur de la revendication 1 ou 2, **caractérisé en ce que** les moyens de pompage couplent dans la fibre une lumière dont 95 % de l'énergie est dans une bande de 978 ± 10 nm, et de préférence dans une bande de 978 ± 3 nm.

4. L'amplificateur de la revendication 1, 2 ou 3, **caractérisé en ce que** les moyens de pompage couplent dans la fibre une lumière dont 95 % de l'énergie est dans une bande de 1470 ± 15 nm, et de préférence dans une bande de 1470 ± 10 nm.

5. L'amplificateur de l'une des revendications 1 à 4, **caractérisé en ce que** la gaine multimode est circulaire.

6. L'amplificateur de la revendication 5, **caractérisé en ce que** le diamètre du coeur monomode est compris entre 5 et 10 µm.

7. L'amplificateur de la revendication 5 ou 6, **caractérisé en ce que** la différence d'indice entre le coeur monomode et la gaine multimode est comprise entre 5.10⁻³ et 15.10⁻³.

8. L'amplificateur de l'une des revendications 1 à 4, **caractérisé en ce que** la gaine multimode n'est pas circulaire.

9. L'amplificateur de la revendication 8, **caractérisé en ce que** le diamètre du coeur monomode est compris entre 3 et 10 µm.

10. L'amplificateur de la revendication 8 ou 9, **caractérisé en ce que** la différence d'indice entre le coeur monomode et la gaine multimode est comprise entre 10.10⁻³ et 40.10⁻³.

11. L'amplificateur de l'une des revendications 1 à 10, **caractérisé en ce que** La différence d'indice entre la gaine multimode et la gaine externe est comprise entre 10.10⁻³ et 150.10⁻³.

12. L'amplificateur de l'une des revendications 1 à 11, **caractérisé en ce que** le coeur monomode est dopé avec une terre rare.

13. L'amplificateur de la revendication 12, **caractérisé en ce que** la terre rare est l'erbium, et est de préférence présent dans le coeur dans une proportion entre 100 et 2000 ppm massiques.

14. Un système de transmission à multiplexage en longueur d'onde en bande C, comprenant au moins un amplificateur selon l'une des revendications précédentes.
